# EUROPEAN PATENT APPLICATION

(11) **EP 3 015 032 A1**
(43) Date of publication of application: **04.05.2016**
(21) Application number: 15192724.1
(22) Date of filing: 03.11.2015
(51) Int. Cl.: A47J 27/00

(54) **ELECTRICAL COOKER INCLUDING HEATING AND COOLING FUNCTIONALITY**

(30) Priority: 03.11.2014 SG 10201407180V
(71) Applicant: Yap, Kah Peng, Singapore 329755 (SG)
(72) Inventor: Yap, Kah Peng, Singapore 329755 (SG)
(74) Representative: Viering, Jentschura & Partner mbB Patent- und Rechtsanwälte

(57) **Abstract**

Embodiments of the present disclosure provide an electrical cooker, configured for cooling and/or heating a food item, including: a platform configured for receiving a cooking receptacle for cooling or heating; a heating element coupled to the platform for thermal transfer through conduction, the heating element further coupled to an electrical source for resistively heating the heating element; and a cooling element, configured for thermal transfer through conduction with the received cooking receptacle, the cooling element further coupled to a vapor-compression cooling system including a refrigerant circulating through the vapor-compression cooling system.

## Description

### Technical Field

The present disclosure describes embodiments generally relating to an electrical cooker. Such an electrical cooker can be utilized generally in domestic environments in handling food, for example, heating or cooling food.

### Background

Currently, commercially available devices for food preparation, such as cooking devices or cooking apparatus such as rice cookers, slow cookers, pressure cookers and air-fryers, are generally used in the same way. A user places uncooked food inside an enclosed container, sometimes with a breath-hole for excess steam to exit. After an amount of water is added into the cooking container, the cooking or heating up process is activated physically by the user. The cooking device then operates heating elements in the cooking device until the food is cooked, and as required by the predetermined settings of the user. Such cooking devices, and the heating elements used therein, include a heat source which can be a contact plate or a heat distribution plate that conductively heats up a cooking container, wherein the cooking container holds food to be prepared or liquid to be heated.

Generally, raw foodstuff can only be put into the cooking container of the cooking device when the user can begin to start cooking as cooking devices have only the ability to heat up the food. Due to such limitations, raw or uncooked foodstuff such as meat and fish cannot be placed into the container at a much earlier time from when cooking begins, as such raw food will become stale or unsuitable for consuming after being left inside for the cooking container until it is ready for cooking.

At present none of the commercially available cooking devices are able to store the raw or uncooked foodstuff inside the cooking cavity in a suitably cool environment, which can prevent raw or uncooked food from becoming stale or turning bad, for long hours before the process of cooking begins.

Prior attempts have been made to provide such a feature. CN 101558681 proposes the use of a Peltier module or Peltier elements, which are cooling devices constructed from two different kinds of metal or semiconductors. The Peltier elements are alternately arranged such that adjacent Peltier elements are different from each other in kind. The Peltier elements are then powered by a magnetic field generating coil of the electromagnetic induction heating cooker or a DC current source.

However, Peltier elements provide only a limited cooling temperature, which are suitable for cooling very small area surfaces such as integrated circuit used in equipment or highly specialized instrumentation, but insufficient for present purposes, in keeping a quantity of raw food from spoiling.

It is thus desired for an alternative electrical cooking appliance which provides users with useful features of refrigeration and cooking within the same device.

### Summary

According to various embodiments in the present disclosure, there is provided an electrical cooker, configured for cooling and/or heating a food item, including: a platform configured for receiving a cooking receptacle for cooling or heating; a heating element coupled to the platform for thermal transfer through conduction, the heating element further coupled to an electrical source for resistively heating the heating element; and a cooling element, configured for thermal transfer through conduction with the received cooking receptacle, the cooling element further coupled to a vapor-compression cooling system including a refrigerant circulating through the vapor-compression cooling system.

In an embodiment, the vapor-compression cooling system includes a compressor, a condenser, an expansion valve, and an evaporator, and wherein the cooling element is the evaporator.

In an embodiment, the cooling element includes a duct for receiving the refrigerant in circulation.

In an embodiment, the heating element and the cooling element are each provided as a coil.

In an embodiment, the heating element and the cooling element are provided as concentric coils.

In an embodiment, the heating element and the cooling element can each include more than one coil.

In an embodiment, any one of the heating element and the cooling element includes more coils than the other.

In an embodiment, the cooling element is coupled to the platform.

In an embodiment, the platform is integrally formed with the heating element and the cooling element.

In an embodiment, the platform further includes a temperature distribution member configured for contact with a base of the cooking receptacle; and wherein the heating element and the cooling element is coupled in contact with the temperature distribution member.

In an embodiment, the electrical cooker further includes a controller configured to selectively operate any one of the heating element or the cooling element.

In an embodiment, only one of the heating element or the cooling element is configured to operate at any time.

In an embodiment, the electrical cooker further includes a temperature sensor provided for determining a surface temperature of the platform.

In an embodiment, the controller operates any one of the heating element or the cooling element based on the temperature sensor determinations.

In an embodiment, the electrical cooker further includes a water dispenser module, including: a water storage tank; a pump; and a water delivery tube arranged to draw water at one end from the water storage tank and deliver the water to the cooking receptacle at the other end.

In an embodiment, the electrical cooker further includes a cover to encapsulate the cooking receptacle in the electrical cooker.

In an embodiment, the platform includes any one of a flat top surface or a curved top surface for receiving a cooking receptacle with a correspondingly shaped base surface.

### Brief description of the Drawings

In the drawings, like reference characters generally refer to the same parts throughout the different views. The drawings are not necessarily to scale, with emphasis instead generally being placed upon illustrating the principles of the present disclosure. It is to be noted that the accompanying drawings illustrate only examples of embodiments of this disclosure and are therefore not to be considered limiting of its scope, for the disclosure may admit to other equally effective embodiments. In the following description, various embodiments of the disclosure are described with reference to the following drawings, in which:
FIG. 1 illustrates a portion of a thermal transfer platform in an electrical cooker according to an embodiment.
FIG. 2 correspondingly shows a vertical cross-sectional view of the thermal transfer platform of FIG. 1, along the line A-A.
FIG. 3 illustrates a cross-sectional view of an electrical cooker with a cooking receptacle.
FIG. 4A and FIG. 4B illustrate a front perspective view and a rear perspective view respectively of an electrical cooker including a cooling system according to an embodiment.
FIG. 5A and FIG. 5B illustrate a front view and a side view respectively of an electrical cooker according to an embodiment.
FIG. 6 illustrates an exploded isometric view of the electric cooker of FIG. 5A and FIG. 5B.
FIG. 7 illustrates a block diagram of a control scheme according to an embodiment.

### Detailed Description

Embodiments of an electrical cooker device are described in detail below with reference to the accompanying figures. However, it should be understood that the disclosure is not limited to specific described embodiments. It will be appreciated that the embodiments described below can be modified in various aspects, features, and elements, without changing the essence of the disclosure. Further, any reference to various embodiments shall not be construed as a generalization of any inventive subject matter disclosed herein and shall not be considered to be an element or limitation of the appended claims except where explicitly recited in a claim(s).

According to various embodiments, depiction of a given element or consideration or use of a particular element number in a particular FIG. or a reference thereto in corresponding descriptive material can encompass the same, an equivalent, or an analogous element or element number identified in another FIG. or descriptive material associated therewith. The use of "/" herein means "and / or" unless specifically indicated otherwise.

The present disclosure can describe embodiments of a device or apparatus or system which can be operable in various orientations, and it thus should be understood that any of the terms "top", "bottom", "base", "down", "sideways", "downwards" etc., when used in the following description are used for convenience and to aid understanding of relative positions or directions, and not intended to limit the orientation of a system or apparatus.

According to various embodiments in the present disclosure, there is provided an electrical cooker, configured for cooling and/or heating a food item, including: a platform configured for receiving a cooking receptacle for cooling or heating; a heating element coupled to the platform for thermal transfer through conduction, the heating element further coupled to an electrical source for resistively heating the heating element; and a cooling element, configured for thermal transfer through conduction with the received cooking receptacle, the cooling element further coupled to a vapor-compression cooling system including a refrigerant circulating through the vapor-compression cooling system.

In providing such a cooking device, embodiments according to the present disclosure provide a cooking device integrated with a vapor compression system as a cooling system. Such a system can efficiently provide for a lowered temperature which can sustain the extended storage of raw food prior to cooking.

As noted earlier, prior attempts to provide cooling included the use of thermoelectric cooling components, such as Peltier elements. A Peltier module, being made up of semi-conductor components is typically costly, and further, has very poor power efficiency. In such a way, as the most efficient way of thermal transfer is through conduction, the Peltier module is placed together or in close proximity to the heating elements of the cooking device, which similarly seek to provide thermal transfer through conduction. Including Peltier modules in the region of high temperature heating elements for cooking increases the risk of operational failure of the Peltier module.

The cooking device of present embodiments seek to provide a more effective and efficient cooling system, while at the same time provides heating and cooling elements operating in close proximity, for effective thermal transfer through thermal conduction.

The technical basis of providing an electrical cooker according to various embodiments is now discussed.

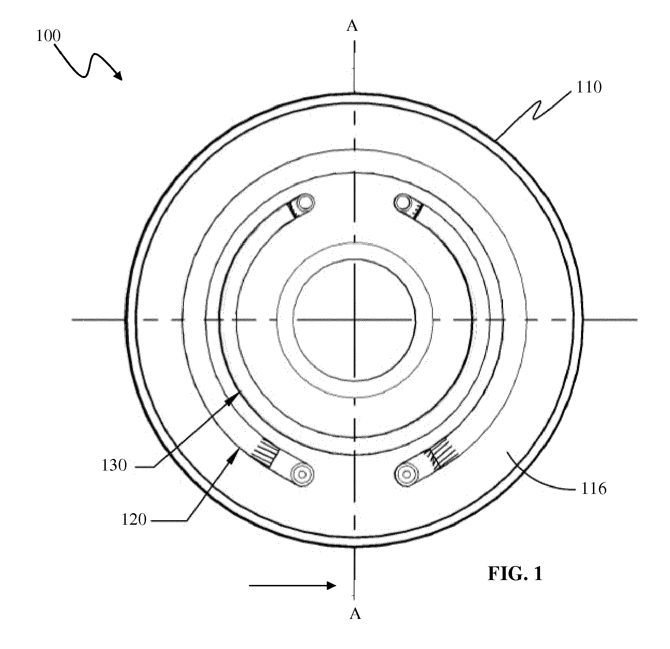

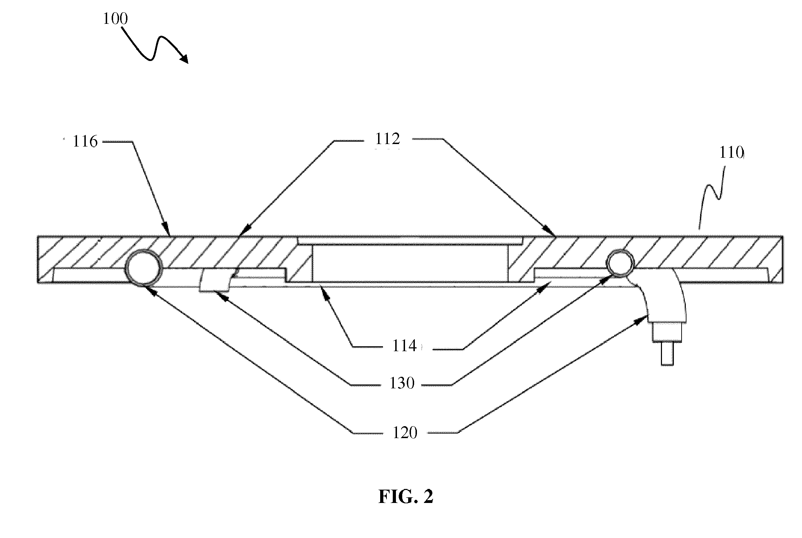

FIG. 1 illustrates a portion of a thermal transfer platform in an electrical cooker according to an embodiment. FIG. 1 can be considered to be a bottom view of the thermal transfer platform, showing heating elements and cooling elements provided in the thermal transfer platform. FIG. 2 correspondingly shows a vertical cross-sectional view of the thermal transfer platform of FIG. 1, along the line A-A. In an embodiment, an electrical cooker 100 can include a thermal transfer platform 110 in the electrical cooker 100. Generally, the platform 110 can include a heating element 120 coupled to the platform 110. The heating element 120 can be provided in thermal contact with the platform 110. Heating element 120 can also be provided as part of the platform 110. Further, a cooling element 130 can be provided. According to various embodiments, the heating element 120 and the cooling element 130 can be provided as part of the platform 110. Further, in embodiments, the heating element 120 and the cooling element 130 can be provided and exposed at a bottom portion of the platform 110, and as illustrated in FIG. 1.

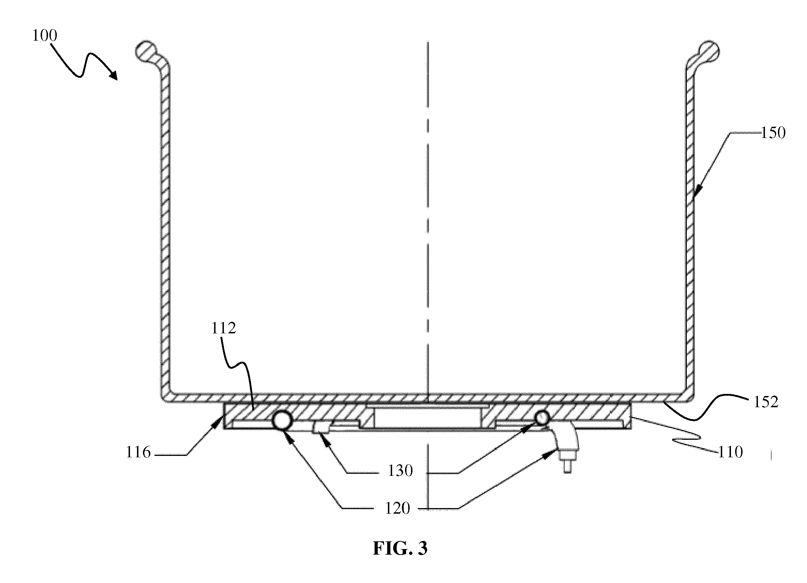

The platform 110 includes a top surface 112 and a bottom surface 114. In embodiments, the heating element 120 and the cooling element 130 can be provided in the platform 110, within the top surface 112 and the bottom surface 114. The platform 110 can be arranged to receive a cooking receptacle 150 (FIG. 3), which is typically a cylindrical pot with a substantially flat base and an exposed opening, where food can be received in the receptacle for cooking. The cooking receptacle 150 can be arranged to rest on the top surface 112 of the platform 110, the top surface 112 and a base 152 of the cooking receptacle 150 configured to be substantially flat, such that an increased amount of surface area is in contact, allowing for more effective thermal transfer through conduction. The electrical cooker 100 can include a body surrounding the cylindrical wall of the pot for providing an enclosed environment, which not only allows for more effective and contained thermal transfer, but also provides for safety in not exposing the possibly scalding hot receptacle.

In embodiments, the platform can include a contoured top surface. Such a top surface can be for example, convex in shape, to receive a cooking receptacle with a correspondingly shaped concave base with an elevated arch. Such an arrangement can provide for a larger contact area to facilitate better thermal transfer through conduction. Further, the convex top surface of the platform and the concave base of the cooking receptacle allows for where the cooking receptacle can be securely received by the platform, reducing occurrence of slippage.

In various embodiments, the electrical cooker 100 provides an integrated heating and cooling function, i.e. the electrical cooker 100 is provided with a heating element and a cooling element, for the heating and/or cooling of a cooking receptacle received within the electrical cooker 100. In embodiments, the heating and cooling function is provided as an integrated device. In embodiments, the heating and cooling function is provided as integral to the thermal transfer platform 110. In embodiments, the platform 110 includes a heating element 120 and a cooling element 130. The heating element 120 and the cooling element 130 can be temperature control elements, and can be provided in close proximity with each other, and in thermal communication with the platform 110.

In embodiments, the heating element 120 and the cooling element 130 can be provided in the form of coils. According to an embodiment, a heating coil 120 and a cooling coil 130 can be provided as coils concentric or parallel with each other. The heating coil 120 can be provide as an outer coil, and the cooling coil 130 can be provided as an inner coil, in or on the platform 110 which can be circular in shape. The heating coil 120 can be provided on the outside to provide a more even heat distribution, as well as reduce the occurrence of concentrating heating towards the center of the platform 110. Heating coil 120 and cooling coil 130 can be seen to form a generally complete circular coil within the platform 110, with each with a first end and a second end leading away from the platform, and coupled to a respective heating system or cooling system. The heating coil 120 and cooling coil 130 can provided at or form a portion of the bottom surface 114 of the platform 110. The platform 110 can further include a temperature distribution member 116, which can form the top surface 112 of the platform 110. The temperature distribution member 116 can be formed of a material with high thermal conductivity, for example an aluminum alloy, stainless steel, or any other appropriate materials.

In other embodiments, the heating element and the cooling element can be provided in different shapes or formation, for example, in a linear form or provided as straight lines or curved lines, or any combination therefrom, which can be provided according to design structures or widths of installation space within the electrical cooker 100.

In further embodiments, the heating elements and the cooling elements are provided in separate portions or positions in the electrical cooker, but still configured to be in direct thermal communication with the received cooking receptacle. For example, the heating element can be provided with the substantially flat receiving platform for thermal transfer by conduction to the cooking receptacle, from the base of the receptacle. The cooling element can be provided in the electrical cooker body around the cylindrical wall of the cooking receptacle or pot. In such a way can provide for separation of the heating element and the cooling element, which may improve operational life of the electrical cooker.

The heating coil 120 can be an electrical heating member which can be a resistive heating element heated when receiving an electrical current or power. The electrical cooker 100 can include a heating system which can include an electrical circuit, which is arranged to receive an external electrical input, which can be from a domestic electrical source, and thereafter converts the received electrical input to an electrical current suitable for use in providing to the heating coil 120 for resistive heating. Besides resistive heating, other kinds of heating elements are also conceivable, such as induction heater and microwave heaters. The heating coil 120 is generally elongate and cylindrical in shape, but can be triangular in cross-section, which can provide an effective contact area between the heating coil 120 and the thermal transfer platform 110.

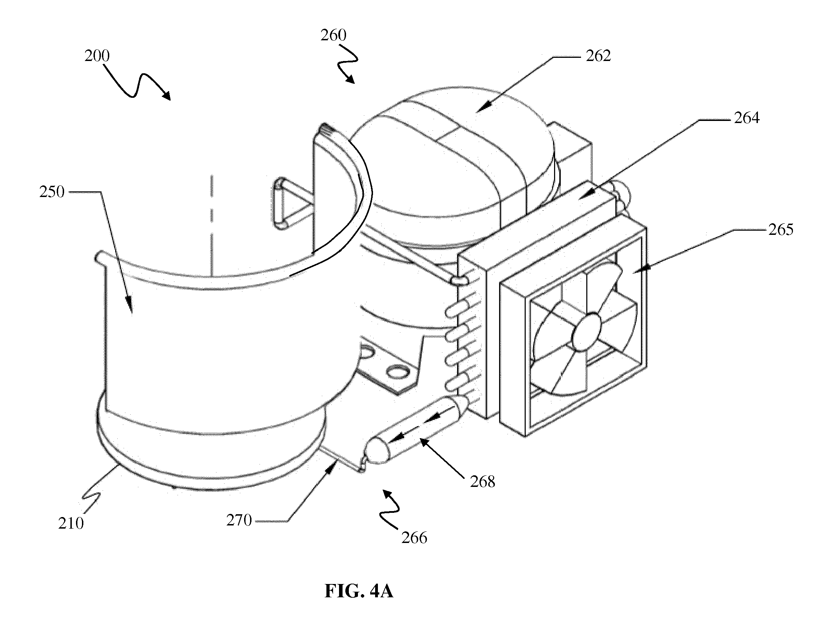

According to embodiments, cooling coil 130 is provided inner to concentric heating coil 120. Cooling coil 130 is coupled to a cooling system (FIG. 4A, 260), provided separate from the platform 110 in the electrical cooker 100. Cooling coil 130 is arranged to be cooled such that a temperature differential is provided between the platform 110 and the cooling coil 130, thus creating a thermal transfer between the temperature distribution member 116 of the platform 110 and the cooling coil 130, which leads to cooling of the platform 110. Further, when a received cooking receptacle 150 rests on platform 110, the temperature differential between cooled temperature distribution member 116 and the cooking receptacle 150 thereafter leads to a thermal transfer by conduction between the cooking receptacle 150 and the cooling coil 130, through the temperature distribution member 116.

FIG. 3 illustrates a cross-sectional view of an electrical cooker with a cooking receptacle. The cooking platform 110 of the electrical cooker 100, which includes a heating element 120 and a cooling element 130, is shown to receive a cooking receptacle 150. The cooking receptacle 150 is received on a temperature distribution member 116 of the platform 110. Top surface 112 of the platform 110 is arranged to contact a base 152 of the cooking receptacle 150. The platform 110 and the cooking receptacle 150 are in thermal communication and are configured to meet with as much surface contact as possible, to provide for effective thermal transfer through conduction. In embodiments, the cooking receptacle 150 can be designed for corresponding use with the cooker, or can be provided as integral with the cooker.

Raw or uncooked food can be placed into the cooking receptacle 150, for processing with or in the electrical cooker 100 according to embodiments. The electrical cooker 100 can include a body and a cover to surround and encapsulate the cooking receptacle 150, allowing for more effective thermal operation, in reducing thermal interactivity with the environment. If the raw food is to be stored for up to extended periods of time, the cooling element 130 in the platform 110 can be activated, which thereafter draws heat from the cooking receptacle 150 and the raw or uncooked food through thermal conduction to the cooling element 130. The cooling element can be configured to lower the temperature of the platform 110 to a steady state temperature of about 1-4 °C, which can be considered ideal refrigeration temperature, thereby keeping the raw or uncooked food fresh for short-term storage. The cooling element can further be configured to operate at other suitable temperatures, for example, from 0-5 °C, or even at sub-zero temperature, for extended storage of food.

After the raw food is cooled or refrigerated, and the food is ready to be cooked, the cooling element 130 can be deactivated, and the heating element 120 is subsequently activated. The heating element 120 can similarly be configured to provide a sufficiently high steady-state temperature of the platform for cooking of the raw or uncooked food in the cooking receptacle 150. The heating element 120 creates a temperature differential, which creates a thermal transfer and subsequently heats up the temperature distribution member 116 of the platform 110, and subsequently the cooking receptacle 150 and the food within. The components are all in thermal communication and thermal transfer is carried out through conduction.

In various embodiments, the heating element 120 and the cooling element 130 can be made of metal. In embodiments, the metal can be copper or an alloy of copper or aluminum or an alloy of aluminum with high thermal conductivity and corrosion resistance.

According to various embodiments, the thermal distribution platform 110 can be made of an aluminum alloy. In embodiments the heating element 120 and cooling element 130 are integrally formed with the platform 110. The attachment of the heating element 120 and the cooling element 130 can be formed as a singular unit together using a die casting method. Alternatively, other methodologies such as soldering, gluing, welding or any other suitable ways can be used.

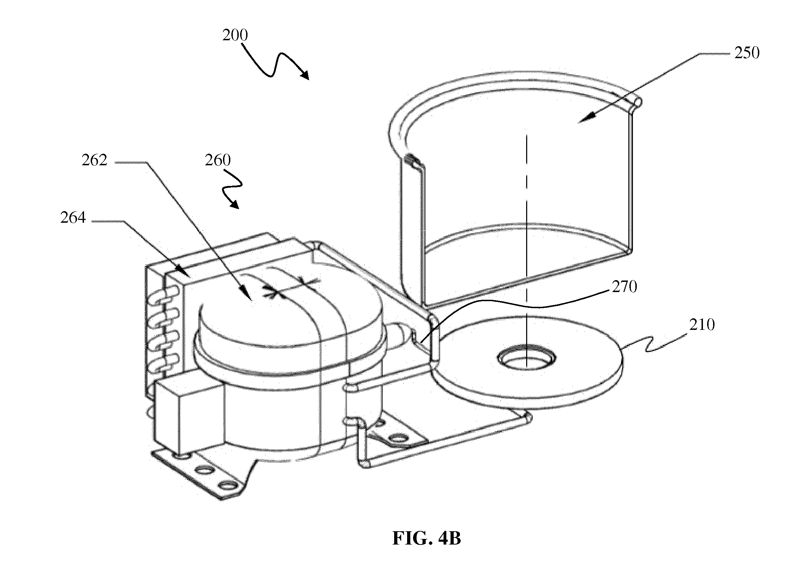

FIG. 4A and FIG. 4B illustrate a front perspective view and a rear perspective view respectively of an electrical cooker including a cooling system according to an embodiment. Electrical cooker 200 can be provided with a thermal transfer platform 210, the platform 210 configured to receive a cooking receptacle 250, of which a cross-sectional portion is shown in FIGs. 4A and 4B. The cooking receptacle 250 can be arranged to receive a portion of raw or uncooked food, which can thereafter be refrigerated for later use or heated up and cooked by the electrical cooker 200. As earlier set out, the platform 210 can be provided with a heating system and a cooling system. The platform 210 can be coupled to or with a heating element and a cooling element. The heating element and the cooling element can be provided in or on the platform 210, and the platform 210 can be arranged to be heated or cooled to correspondingly heat or cool the cooking receptacle 250.

In an embodiment, the cooling element can be coupled to a cooling system 260. The cooling system 260 can include a vapor-compression cooling system. Such a cooling system can generally include a compressor 262, a condenser 264, a thermal expansion valve 266 and an evaporator. In an embodiment, the cooling element is the evaporator in the cooling system 260. In such a cooling system, a liquid refrigerant is circulated, and acts as the medium which absorbs and removes heat from an identified portion to be cooled. The heat is then rejected from the system at a separate location.

Circulating refrigerant enters the compressor 262 as saturated vapor, which contains as little thermal energy as it can without condensing, and is compressed to a higher pressure and a higher temperature, as superheated vapor. The superheated vapor from the compressor can be considered to be at a temperature and pressure at which it can be condensed with cooling air. The superheated vapor is then provided to the condenser 264 which contains a snaked coil of tubes where the vapor is cooled by cool air flowing across the coil. Condenser 264 is coupled to a circulating fan 265 which draws air circulation across the coils. The circulating refrigerant rejects heat from the system at the condenser 264, and the rejected heat is carried away by the air blown from the fan 265. The superheated vapor is condensed to liquid refrigerant after exiting from the condenser 264.

The condensed liquid refrigerant, in the thermodynamic state known as a saturated liquid, is thereafter routed through an expansion valve 266 where it undergoes a sudden reduction in pressure. That pressure reduction results in the adiabatic flash evaporation of a part of the liquid refrigerant. The auto-refrigeration effect of the adiabatic flash evaporation lowers the temperature of the liquid and vapor refrigerant mixture to where it is colder than the temperature of the enclosed space to be refrigerated. The expansion valve 266 can also be known as throttling device or a throttling valve, which can be a flow restricting device that causes a significant pressure drop in fluid. Expansion valve 266 can include a filter dryer 268 and a capillary tube 270 which can serve to regulate the cooling of the refrigerant.

Filter dryer 268 can be placed at the outlet of the condenser 264 and can contain mesh screens to trap contaminants and chemicals, and also for absorbing residual moisture and removing micro particles. Filter dryer 268 thus provides protection for the capillary tube 270, which can become clogged by debris due to the small diameter of the tube 270, and block the flow of liquid refrigerant from reaching the evaporator, which prevents cooling from taking place. Capillary tube 270 can be an elongate tube which serves to reduce the pressure of the liquid refrigerant, which leads to the lowering of the boiling point of the refrigerant and a subsequent temperature drop. Capillary tube 270 can be provided in a coil pattern to allow easy housing within the confined spaces of the electrical cooker. Cold liquid refrigerant is passed through the capillary tube 270 and into the evaporator or cooling element, through which heat is intended to be absorbed.

According to various embodiments, the cooling element serves as the evaporator of the cooling system 260. The refrigerant passing through the cooling element causes heat exchange between the cooling element and the platform 210 while absorbing latent heat of vaporization, and as a result, the platform 210 is cooled. Correspondingly, the cooking receptacle 250 received on the platform 210 and raw or uncooked food inside the cooking receptacle 250 is cooled. During this heat absorption process, the liquid refrigerant evaporates into pure vapor which is thereafter carried to the compressor 262, which repeats the cooling cycle in the cooling system 260.

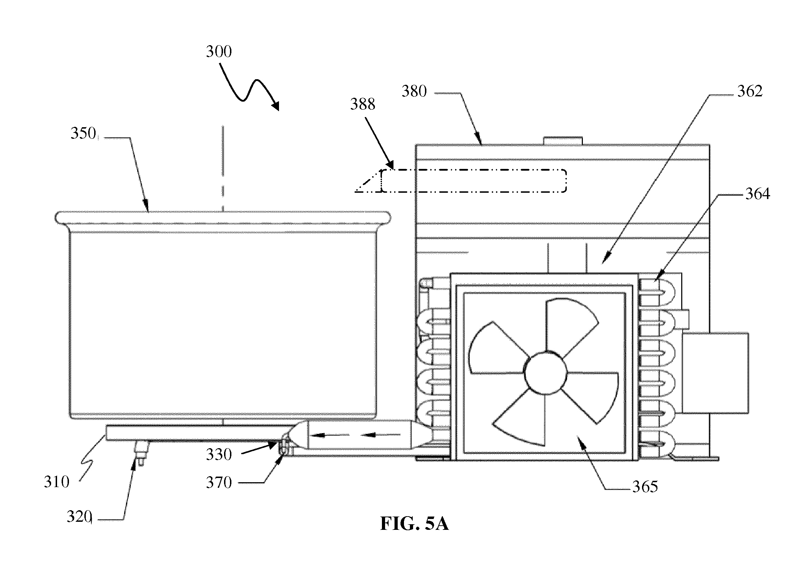

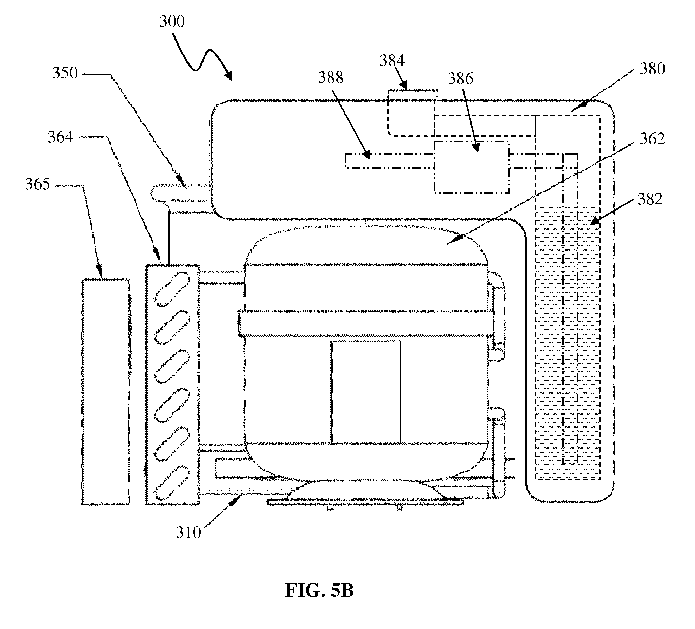

FIG. 5A and FIG. 5B illustrate a front view and a side view respectively of an electrical cooker according to an embodiment. In embodiments, an electrical cooker 300 is provided. Electrical cooker 300 can include an integrated heating and cooling system provided as a thermal transfer platform 310. Thermal transfer platform 310 can be coupled to a heating element 320 and a cooling element 330. The cooling element 330 can be coupled to a cooling system 360.

Cooling system can include a compressor 362, a condenser 364, and a thermal expansion valve 366. Cooling element 330 can be configured as an evaporator as part of the cooling system 360. Expansion valve 366 can include a capillary tube 370 arranged for providing an auto-refrigeration effect, and is coupled to the cooling element 330 in delivering refrigerant for cooling, the refrigerant subsequently exiting at an opposing end of the cooling element, for re-circulation through the cooling system 360. Fan 365, which can be a motorized fan, can be provided for transmission of air between the heat exchange section and the outside environment, and arranged to carry away heat generated by the condenser 364 during the condensation of superheated refrigerant vapor from the compressor 362.

Further, electrical cooker 300 can include a water dispensing module 380 configured for providing water in the cooking of food stuff in the cooking receptacle 350. Water dispensing module 380 can include a water storage tank 382 arranged to retain an amount of water sufficient for usage in the cooking of food stuff with the electrical cooker 300. Water can be injected into the water storage tank 382 by a user through a removable lid 384 provided on the top of the water dispensing module 380. Water dispensing module 380 can include a pump 386 for the extraction of water from the storage tank 382 for providing to the cooking receptacle 350 for facilitating the cooking of raw food placed in the cooking receptacle 350. Water can be provided through a delivery tube 388 which terminates above the open aperture of the cylindrical cooking receptacle 350. In embodiments, electric cooker 300 includes a cooker body (not shown), which encloses the cooking receptacle and provides a closed environment for more effective thermal transfer. The water dispensing module 380 can be arranged to be provided within such a cooker body, for provision of water into the cooking receptacle.

Such a water dispensing module 380 is useful in an electric cooker according to various embodiments, as water is typically added to food just prior to cooking with a typical electrical cooker, but there is a general consideration to not soak food in water for long period, as doing so affects how the food stuff, when cooked, would turn out. Providing a water dispensing module 380 thus provides an option for a user to delay the provision of water to the food in the cooking receptacle 350 until the food is ready to be cooked.

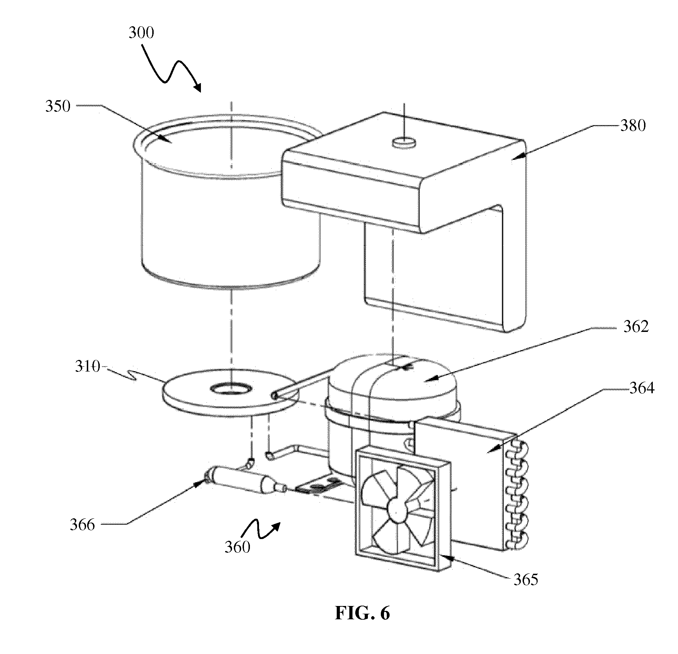

FIG. 6 illustrates an exploded isometric view of the electric cooker of FIG. 5A and FIG. 5B. Electrical cooker 300 can include an integrated heating and cooling system provided as a thermal transfer platform 310. Thermal transfer platform 310 can be coupled to a heating element 320 and a cooling element 330. The cooling element 330 can be coupled to a cooling system 360. Cooling system can include a compressor 362, a condenser 364, and a thermal expansion valve 366. Cooling element 330 can be configured as an evaporator as part of the cooling system 360. Expansion valve 366 can include a capillary tube 370 coupled to the cooling element 330 in delivering refrigerant for cooling. Fan 365 can be provided to carry away heat generated by the condenser 364. Electric cooker 300 can include water dispensing module 380 for providing water in the cooking of food stuff in the cooking receptacle 350.

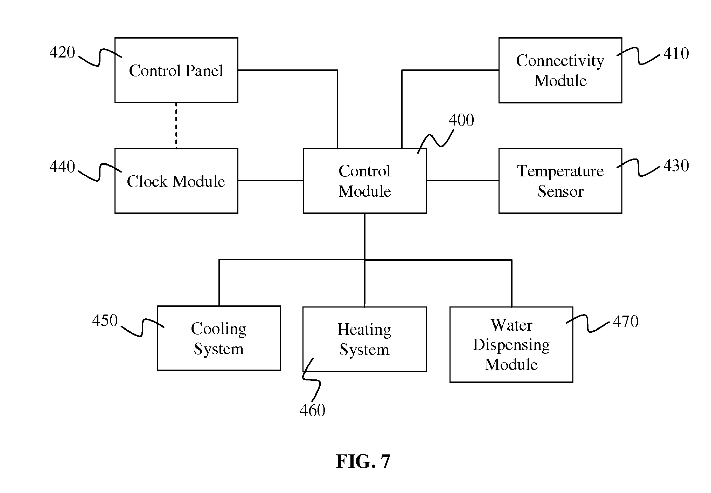

FIG. 7 illustrates a block diagram of a control scheme according to an embodiment. Electric cooker 300 can include a controller or a control module 400, which can include a processor and a memory or non-transitory computer readable medium, on which can include software instructions which can be carried out by the processor. The control module 400 can be configured to receive input from a plurality of sensors or sub-controllers, and similarly provide instructions or control a plurality of devices or subsystems.

In embodiments, the electrical cooker can include a processing system which further includes a processor and a memory which is for example used in the processing carried out by the processing system. A memory used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

In an embodiment, a "circuit" or a "module" may be understood as any kind of a logic implementing entity, which may be special purpose circuitry or a processor executing software stored in a memory, firmware, or any combination thereof. Thus, in an embodiment, a "circuit" or a "module" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" or a "module" may also be a processor executing software, e.g. any kind of computer program, e.g. a computer program using a virtual machine code such as e.g. Java. Any other kind of implementation of the respective functions which will be described in more detail below may also be understood as a "circuit" or a "module" in accordance with an alternative embodiment.

According to various embodiments, there is provided a computer program readable medium having a program recorded thereon, hosted on a processing system, where the program is executed to operate the electrical cooker. In embodiments, the computer program readable medium includes instructions for operating the electrical cooker.

According to various embodiments, the control module 400 can be coupled to a connectivity module 410. The connectivity module 410 can provide connectivity for the control module 400 of the electrical cooker to the internet for communication with a user or an online program. The connectivity module 410 can be a wired networking module providing a local area network connection to a networking modem, or can be a wireless networking module connecting over, for example, Wi-fi™ to a networking modem. In embodiments, the connectivity module 410 can be a cellular networking module providing connection to a mobile networking base station.

A user is thus provided remote access to the electrical cooker, allowing him to control the operation of the electrical cooker from a location separate from the physical electrical cooker. In embodiments, a mobile application or a web-based application can be used to control or operate the electrical cooker. The user is provided with a capability to remotely operate the electrical cooker and various functions of the electrical cooker, for example, but not limited to, turning on the cooling system, adjusting the cooling temperature, turning off the cooling system, turning on the heating system, adjusting the cooking temperature, operating the water dispensing system to provide water to the food in the cooking receptacle, switching off the electrical cooker, etc.

Further, the control module 400 can be coupled to a control panel 420 provided for a user's manual input. The control panel 420 can include input buttons for a user to configure operation of the electrical cooker. The control panel 420 can provide a user options to control operation of the heating and cooling system, temperature of operation, operation activation time, etc. The control module 400 can also include, in a database for example residing in a memory, a plurality of pre-programmed refrigeration and/or cooking options, which provides simplicity for a user, who then is only required to suitably select from a range of programs.

Electrical cooker 300 can further include a temperature sensor 430, provided in the platform 310, for providing a feedback on the temperature of the platform and thus the cooking receptacle. For example, the temperature sensor 430 can be used to monitor the low temperature of the platform as to maintain a low temperature of 0 to 5 °C inside the cooking receptacle. Keeping raw or uncooked food stuff within this recommended range of temperature can allow food to retain its freshness under short term storage. In embodiments, the control module 400 can be configured to cease operation of the cooling system when the temperature has stabilized at a predetermined temperature, which can prevent unnecessary wastage of electric power, and thereby also enhancing cooling efficiency. Similarly, the control module 400 can be configured to lower the operating temperature of the heating system after a predetermined timing, indicating that the food has been adequately cooked. The electrical cooker can then be placed in a "keep warm" mode, which operates the heating system at a minimal level in keeping the cooked food warm for consumption by the user shortly.

Control module 400 can also be coupled to an internal clock module 440, which can provide for timing-based control of the electrical cooker. In various embodiments, the control module is provided with monitoring sensors provided in the cooling system and/or the heating system, to allow the control module to obtain a feedback into the operational optimization or efficiency of the temperature adjustment modules. In the event a fault occurs, for example in the condenser freezing up or the fan not functioning, an alert can be provided by the control module to the user, perhaps through the control panel or through an online alert, for action to be taken.

According to various embodiments, the control module 400 is coupled to control the cooling system 450, control the heating system 460 and control the water dispensing module 470. Control module can be configured to receive user input and determine operation and level of operation of the cooling system and the heating system. For example, during a storage period, where raw food stuff is to be refrigerated, the control module 400 activates the cooling system. When the appropriate time for cooking is reached, or when a user manually activates the cooking function, control module can turn off the cooling system and activate the heating system. Further, the control module 400 can control the water dispensing module to pump water from the storage tank for provision to the cooking receptacle. The amount of water extracted can user-determined or can be based on various pre-preprogrammed cooking options. For example, the amount of water to be provided can be based on methods of cooking such as rice cooking, porridge cooking, stew meat cooking, steam cooking and soup cooking, etc.

In use, a user can place a portion of raw or uncooked food stuff into the cooking receptacle 350 of the electrical cooker 300. The user can thereafter utilize the control panel of the electrical cooker to enter a pre-programmed cooking option, or any other input. Such a cooker can provide advantageous operation in that the user can conveniently place raw food into the cooker early in the day for a meal to be prepared much later the same day, or even the next day. When user programming is completed, the electrical cooker 300 can activate the cooling system 360 which keeps the raw food refrigerated and chilled. If the raw food is, for example frozen, the electrical cooker can modulate the cooling system 360 to provide a thawing feature that allows the frozen food to thaw but still chilled to prevent spoilage. When appropriate, the cooling system 360 can cease operation, to minimize electrical costs. For example, the electrical cooker 300 can shut off the cooling system 360 a predetermined period prior to activating the heating system, which can allow the cooking receptacle and the raw food within to warm up to room temperature prior to cooking.

The heating system is then activated by the control module of the electrical cooker according to a user-determined timing. Alternatively, the user can remotely access the electrical cooker 300 through a web-based or mobile device application for manual operation of the electrical cooker 300, for example to start a cooking function. The electrical cooker 300 can also be configured to determine if the food in the cooking receptacle is acceptably cooked, for example, based on the temperature sensor in conjunction with predetermined timings. The electrical cooker can thereafter place itself in a warm food mode, which provides a minimal operation of the heating system in keeping the food warm for the user's consumption, for example, when he returns home at the end of the day.

Providing remote control of the electrical cooker, i.e. a user not needing to physically operate the electrical cooker at its present location, can allow the user to save much time and costs. Uncooked food placed in the electrical cooker can be ready for consumption as planned when the user reaches home after a long day out. Accordingly, such an electrical cooker can provide great economic and efficiency benefits since the all ingredients for the meal to be cooked can be allocated and deposited much earlier in the day and relieves the user from concerns of cooking through the day.

The above apparatus, method and/or system as described and illustrated in the corresponding figures, is not intended to limit an or any apparatus, method or system as according to an embodiment, and the scope of the present disclosure. The description further includes, either explicitly or implicitly, various features and advantages of the method or system according to the present disclosure, which can be encompassed within an apparatus, method or system according to the disclosure.

While embodiments of the disclosure have been particularly shown and described with reference to specific embodiments, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

## Claims

1. An electrical cooker, configured for cooling and/or heating a food item, comprising:
a platform configured for receiving a cooking receptacle thereon for cooling or heating;
a heating element coupled to the platform for thermal transfer with the platform through conduction for heating the received cooking receptacle, the heating element further coupled to an electrical source for resistively heating the heating element; and
a cooling element coupled to the platform for thermal transfer with the platform through conduction for cooling the received cooking receptacle, the cooling element further coupled to a vapor-compression cooling system comprising a refrigerant circulating through the vapor-compression cooling system.

2. The electrical cooker of claim 1, wherein the vapor-compression cooling system comprises a compressor, a condenser, an expansion valve, and an evaporator, and wherein the cooling element is the evaporator.

3. The electrical cooker of claim 1 or 2, wherein the cooling element comprises a duct for receiving the refrigerant in circulation.

4. The electrical cooker of any one of the preceding claims, wherein the heating element and the cooling element are each provided as a coil.

5. The electrical cooker of claim 4, wherein the heating element and the cooling element are provided as concentric coils.

6. The electrical cooker of claim 4 or 5, wherein the heating element and the cooling element each comprises more than one coil, and any one of the heating element and the cooling element comprises more coils than the other.

7. The electrical cooker of any one of the preceding claims, wherein the cooling element and the heating element are provided in the platform.

8. The electrical cooker of any one of the preceding claims, wherein the platform is integrally formed with the heating element and the cooling element.

9. The electrical cooker of claim 8, wherein the platform further comprises a temperature distribution member configured for contact with a base of the cooking receptacle; and wherein the heating element and the cooling element are coupled in contact with the temperature distribution member for thermal transfer through conduction.

10. The electrical cooker of any one of the preceding claims, further comprising a controller configured to selectively operate any one of the heating element and the cooling element.

11. The electrical cooker of claim 10, wherein only one of the heating element and the cooling element is configured to operate at any time.

12. The electrical cooker of claim 10 or 11, further comprising a temperature sensor provided for determining a surface temperature of the platform, and the controller operates one of the heating element and the cooling element based on the temperature sensor determinations.

13. The electrical cooker of any one of the preceding claims, further comprising a water dispenser module, comprising: a water storage tank; a pump; and a water delivery tube arranged to draw water at one end from the water storage tank and deliver the water to the cooking receptacle at the other end.

14. The electrical cooker of any one of the preceding claims, further comprising a cover to encapsulate the cooking receptacle in the electrical cooker.

15. The electrical cooker of any one of the preceding claims, wherein the platform comprises a flat top surface or a curved top surface for receiving a cooking receptacle with a correspondingly shaped base surface.
